# EUROPÄISCHE PATENTSCHRIFT

(11) **EP 3 747 074 B1**
(45) Veröffentlichungstag und Bekanntmachung des Hinweises auf die Patenterteilung: **14.07.2021**
(21) Anmeldenummer: 19783643.0
(22) Anmeldetag: 28.08.2019
(51) Int. Cl.: H01M 8/04029, H01M 8/04225, H01M 8/04223, H01M 8/249, H01M 8/04007

(54) **KÜHLSYSTEM FÜR BRENNSTOFFZELLENSTACKS**
COOLING SYSTEM FOR FUEL CELL STACKS
SYSTÈME DE REFROIDISSEMENT CONÇU POUR UN EMPILEMENT DE PILE À COMBUSTIBLE

(30) Priorität: 29.08.2018 DE 102018214640
(43) Veröffentlichungstag der Anmeldung: 09.12.2020
(73) Patentinhaber: Robert Bosch GmbH, 70469 Stuttgart (DE); Nikola Corporation, Phoenix, AZ 85040 (US)
(72) Erfinder: LYNK, Kevin, Phoenix, AZ 85044 (US); SCHNEIDER, Jesse, Chandler, AZ 85286 (US); BELSCHNER, Werner, 74544 Michelbach An Der Bilz (DE); HEYSE, Jörg, 74354 Besigheim (DE); REMLINGER, Markus, 83714 Miesbach (DE)
(74) Vertreter: Kietzmann, Lutz
(86) Internationale Anmeldenummer: PCT/IB2019/057252
(87) Internationale Veröffentlichungsnummer: WO 2020/044260

(56) Entgegenhaltungen:
- DE-A1-102009 012 994
- DE-A1-102015 215 790
- DE-A1-102017 200 389

## Beschreibung

Die vorliegende Erfindung betrifft ein Kühlsystem für Brennstoffzellenstacks und ein Kraftfahrzeug, welches ein solches Kühlsystem umfasst.

Um einen möglichst guten Wirkungsgrad für die Brennstoffzelle zu erreichen, muss diese mit einer bestimmten, möglichst gleichbleibenden Betriebstemperatur betrieben werden. Die Betriebstemperatur hängt dabei vom Typ der Brennstoffzelle ab. Bei einem Überhitzen der Brennstoffzelle muss die Leistung der Brennstoffzelle beschränkt werden. Aus diesem Grund ist eine ausreichende Kühlung während des Betriebes wichtig. Zum anderen kann bei einer Betriebsaufnahme der Brennstoffzelle bei niedrigen Temperaturen, die als Kaltstart bezeichnet wird, die Brennstoffzelle nur eine geringe Leistung bereitstellen, da die elektrochemische Reaktion und damit die Spannung der Brennstoffzelle stark temperaturabhängig sind. Daher muss die Temperatur der Brennstoffzelle bei einem Kaltstart zügig erhöht werden.

### Stand der Technik

Aus der EP 2 287 952 B1 ist eine Temperiervorrichtung zum Temperieren eines Brennstoffzellenstacks bekannt.

Die DE 10 2015 215 790 A1 betrifft ein Brennstoffzellen-Kühlmittelkreislauf-Entlüftungsventil für ein Brennstoffzellensystem. Das Entlüftungsventil umfasst einen innen im Wesentlichen hohlzylinderförmig ausgebildeten, äußeren Ventilkörper mit einer Mehrzahl von Ventilkörper-Anschlüssen und einem darin befindlichen, außen im Wesentlichen zylinderförmig ausgebildeten, inneren Ventilglied mit einem Ventilglied-Außenanschluss. Mittels einer Verdreh-Schaltstellung des Ventilglieds gegenüber dem Ventilkörper ist ein Ventilkörper-Anschluss oder eine Mehrzahl der Ventilkörper-Anschlüsse mit dem Ventilglied-Außenanschluss in Fluidkommunikation bringbar.

In der DE 10 2017 200 389 A1 ist ein Wärme-Management-System für ein Brennstoffzellenfahrzeug offenbart.

Aus der DE 10 2009 012 994 A1 ist ein Heizsystem zur Optimierung einer Ausführung von Erwärmungsaufgaben in einem Brennstoffzellenfahrzeug offenbart. Das System einen Stapelkühlmittelkreislauf mit einem Brennstoffzellenstapel, einer primären Pumpe und einem Kühlermodul umfasst. Ein Bypasskühlmittelkreislauf ist parallel zu dem Stapelkühlmittelkreislauf zwischen dem Brennstoffzellenstapel und dem Kühlermodul angeordnet und mit diesem verbunden.

Der Hintergrund der Erfindung liegt darin, dass ein solches Kühlsystem für die Brennstoffzelle in die vorhandenen Systeme des Fahrzeuges integriert werden muss. Bei verschiedenen Fahrzeugen können sich dadurch erhebliche Kosten für die Anpassung eines solchen Kühlsystems an das vorhandene System im Fahrzeug ergeben. Zudem geht eine solche Anpassung meisten zu Lasten der Wartungsfreundlichkeit des Kühlsystems.

Es ist daher die Aufgabe der vorliegenden Erfindung ein Kühlsystem für Brennstoffzellenstacks anzugeben, welches besser und wirtschaftlicher in das Fahrzeug integrierbar ist.

### Offenbarung der Erfindung

Die Aufgabe wird durch ein Kühlsystem für Brennstoffzellenstacks nach Anspruch 1 gelöst. Die jeweils rückbezogenen abhängigen Ansprüche geben vorteilhafte Weiterbildungen der Erfindung wieder.

Das Kühlsystem umfasst dabei wenigstens ein erstes Kühlmodul, welches einen wenigstens eine Brennstoffzelle aufweisenden Brennstoffzellenstack, einen Zulaufleitungsanschluss zum Anschließen einer Zulaufleitung zum Zuführen von Kühlmedium zum Brennstoffzellenstack, einen Ablaufleitungsanschluss zum Anschließen einer Ablaufleitung zum Abführen von Kühlmedium von dem Brennstoffzellenstack, und einen Entlüftungsleitungsanschluss zum Anschließen einer Entlüftungsleitung, umfasst.

Das Kühlsystem umfasst zusätzlich wenigstens ein zweites Kühlmodul, welches wenigstens eine Sammelleitung, wobei die Sammelleitung über die Zulaufleitung mit dem Zulaufleitungsanschluss des wenigstens einen ersten Kühlmoduls verbunden ist, wenigstens einen Kühlerleitungsanschluss zum Anschluss an eine Kühlerleitung eines Kühlers, über welche der Sammelleitung gekühltes Kühlmedium des wenigstens einen Brennstoffzellenstacks zuführbar ist, wenigstens einen Bypassleitungsanschluss zum Anschluss an eine Bypassleitung, mittels welcher eine Kühlung des Kühlmediums umgehbar ist, einen Startup-Heater, welcher über eine Startup-Heater-Zuführleitung und eine Startup-Heater-Abführleitung mit der Sammelleitung verbunden sind, wobei die Startup-Heater-Zuführleitung und die Startup-Heater-Abführleitung in Strömungsrichtung der Sammelleitung nach einem der Sammelleitung über den Bypassleitungsanschluss zugeführten Kühlmedium angeordnet sind, und wenigstens ein Wärmetauscherzuleitungsanschluss und wenigstens einen Wärmetauscherableitungsanschluss zum Anschließen eines Wärmetauschers, umfasst.

Als Anschluss im Sinne der Erfindung wird dabei jede Verbindungsmöglichkeit zu einer Leitung verstanden. Dieser Anschluss kann somit direkt an einem Gerät, wie dem Brennstoffzellenstack, an einer Leitung oder einem Leitungsende sein.

Ein Startup-Heater im Sinne der Erfindung ist ein Heizer, welcher bevorzugt elektrisch betrieben wird und besonders bevorzugt ein PTC-Heizer ist. Auch sind elektrische Heizer mit flächigen Heizelemente einsetzbar. Dieser Startup-Heater wird insbesondere beim Kaltstart betrieben, um den wenigstens einen Brennstoffzellenstack schnell auf Betriebstemperatur zu bringen. Zusätzlich kann der Startup Heater gleichzeitig schnell zu einer Erwärmung des Wärmetauschers beziehungsweise der Fahrgastkabine beitragen.

Als Sammelleitung ist dabei eine Leitung zu verstehen in die aus verschiedenen Quellen das Kühlmedium eingeleitet und weitertransportiert wird. Nachdem das gesamte Kühlmedium in die Sammelleitung eingeleitet wurde, wird das Kühlmedium zu den verschiedenen Brennstoffzellenstacks in den verschiedenen ersten Kühlmodulen geleitet.

Die Kühlerleitung ist dabei die Leitung, welche zwischen einem Kühler und dem Kühlerleitungsanschluss angeordnet ist. Die Bypassleitung ist die Leitung, über welche das Kühlmedium am Kühler ohne Kühlung vorbeileitbar ist. Dies hat den Vorteil, dass während einer Kaltstartphase durch das heißere Kühlmedium eine schnellere Aufheizung der Brennstoffzellenstacks erzielt wird.

Durch die modulare Bauweise hat die Erfindung zusätzlich die Vorteile, dass die Module an der Funktion der Module entsprechenden und gut zugänglichen beziehungsweise wartungsfreundliche Orten verbaubar sind. Um die Module in ein bestehendes System einzubinden sind zudem wenige Verbindungsleitungen notwendig. Dadurch lässt sich das Kühlsystem besser und wirtschaftlicher in ein Fahrzeug integrieren.

Bevorzugt ist an der Sammelleitung wenigstens ein Ausgleichsbehälteranschluss zum Anschließen wenigstens eines Ausgleichsbehälters angeordnet. Dadurch kann der durch temperaturbedingte Ausdehnung, Verdunstung oder Verdampfung entstehende Verlust kompensiert werden.

Vorteilhafterweise ist wenigstens ein lonentauscheranschluss zum Anschließen wenigstens eines lonentauschers angeordnet. Dadurch kann den Brennstoffzellenstacks Kühlmedium mit einem auf die Brennstoffzellenstacks abgestimmten lonengehalt zur Verfügung gestellt werden.

In einer bevorzugten Ausführung der Erfindung ist der Wärmetauscher ein Kabinenheizungswärmetauscher. Dies hat den Vorteil, dass mittels der Abwärme des Brennstoffzellenstacks die Fahrgastkabine geheizt werden kann. Dadurch kann zusätzlich die Kühlleistung der Kühler reduziert werden.

In einer weiteren bevorzugten Ausführung der Erfindung weist das zweite Kühlmodul wenigstens eine Kühlmediumpumpe auf, mittels welcher das Kühlmedium zum ersten Kühlmodul pumpbar ist. Bevorzugt wird dabei mehreren ersten Kühlmodulen Kühlmedium über eine einzige Kühlmediumpumpe zugeführt. Dadurch können Kühlmediumpumpen eingespart werden. In einer weiteren bevorzugten Ausführungsform ist für jedes erste Kühlmodul eine separate Kühlmediumpumpe angeordnet, mittels welcher jedem ersten Kühlmodul getrennt voneinander Kühlmedium zuführbar ist. Dadurch kann insbesondere während eines Kaltstartes lediglich ein einziger Brennstoffzellenstack betrieben werden, welcher schnell eine Betriebstemperatur erreicht. Die Abwärme dieses Brennstoffzellenstacks kann dabei dazu genutzt werden, die anderen Brennstoffzellenstacks auf Betriebstemperatur zu bringen.

Vorzugsweise umfasst das erste Kühlmodul die Zulaufleitung, welche mit dem Zulaufleitungsanschluss verbunden ist. Die Zulaufleitung weist dabei vorzugsweise eine Kühlmediumpumpe auf, mittels welcher das Kühlmedium zum Brennstoffzellenstack pumpbar ist. Über die Kühlmediumpumpe ist das Kühlmedium dem Brennstoffzellenstack und anschließend der Sammelleitung zuführbar. Dadurch wird ein geschlossener Pumpkreislauf gebildet. Zusätzlich kann über eine Ansteuerung der Kühlmediumpumpe eines entsprechenden ersten Kühlmoduls geregelt werden, ob das Kühlmodul mit Kühlmittel durchströmt wird. Dadurch kann während einer Kaltstartphase zuerst ein Brennstoffzellenstack aufgeheizt werden, bis weitere Brennstoffzellenstacks zugeschaltet werden.

Vorteilhafterweise umfasst das erste Kühlmodul die Ablaufleitung, welche mit dem Ablaufleitungsanschluss verbunden ist. In einer vorteilhaften Weiterbildung weist das erste Kühlmodul wenigstens einen Zwischenkühler auf, welcher zwischen der Zulaufleitung und der Ablaufleitung angeordnet ist, so dass ein Teil des Kühlmediums von der Zulaufleitung in die Ablaufleitung leitbar ist. Mittels des Zwischenkühlers wird die in die Brennstoffzelle eingebracht Luft in einen für die Brennstoffzelle notwendigen Temperaturbereich gebracht. Dadurch kann ein optimaler Betrieb der Brennstoffzelle sichergestellt werden.

In einer weiteren bevorzugten Ausführung der Erfindung ist zusätzlich zu dem Zwischenkühler ein Wasserstoff-Wärmetauscher angeordnet, über welchen der dem Brennstoffzellenstack zugeführte Wasserstoff kühlbar beziehungsweise vorwärmbar ist. Der Wasserstoff-Wärmetauscher kann dabei in reihe oder parallel zu dem Zwischenkühler angeordnet sein.

In einer bevorzugten Ausgestaltung ist in der Startup-Heater-Zuführleitung eine Startup-Heater-Pumpe angeordnet, mit welcher dem Startup-Heater Kühlmedium der Sammelleitung zuführbar ist. Dadurch kann auf eine Drossel in der Sammelleitung zwischen Startup-Heater-Zuführleitung und Startup-Heater-Abführleitung verzichtet werden. Der Widerstand in der Sammelleitung wird dadurch reduziert. Die Startup-Heater-Pumpe wird zusätzlich nur bei einem Betrieb des Startup-Heaters und/oder der Kabinenheizung betrieben.

Besonders bevorzugt sind der Wärmetauscherzuleitungsanschluss und der Wärmetauscherableitungsanschluss für einen parallelen oder seriellen Betrieb des Wärmetauschers zum Startup-Heater angeordnet. Bei einem parallelen Betrieb wird das Kühlmedium zusätzlich auch dem Wärmetauscher zugeleitet, so dass beispielweise eine Fahrgastzelle aufwärmbar ist. Im Gegensatz dazu kann bei einem seriellen Betrieb, insbesondere dann, wenn der Wärmetauscher in Strömungsrichtung nach dem Startup-Heater angeordnet ist, das bereits durch den Startup-Heater aufgeheizte Kühlmedium dem Wärmetauscher zugeleitet werden, so dass durch die elektrische Aufheizung des Kühlmediums eine bessere Erwärmung einer beispielsweise Fahrgastzelle erfolgen kann.

Das Kühlmedium des wenigstens einen Bypassleitungsanschlusses ist vorzugsweise in Strömungsrichtung der Sammelleitung nach dem Kühlerleitungsanschluss der Sammelleitung zuführbar. Dadurch kann in vorteilhafter Weise die Kühlung des Kühlmediums umgangen werden.

In einer alternativen vorteilhaften Ausführungsform ist das Kühlmedium des wenigstens einen Bypassleitungsanschlusses in Strömungsrichtung der Sammelleitung vor dem Kühlerleitungsanschluss der Sammelleitung zuführbar. Diese Ausführungsform hat den Vorteil, dass verschiedene vorteilhafte Anordnungen möglich sind. Besonders bevorzugt ist dabei die Startup-Heater-Zuführleitung in Strömungsrichtung der Sammelleitung, vor dem über den Kühlerleitungsanschluss der Sammelleitung zugeführten Kühlmediums angeordnet. Dadurch kommt es erst zu einer Durchströmung des Startup-Heaters, wenn das Kühlmedium über die Bypassleitung der Sammelleitung zugeleitet wird. Zu einer Durchströmung des Startup-Heaters kommt es somit erst, wenn der Kühler umgangen wird um eine schnellere Aufheizung zu erzielen. Die schnellere Aufheizung kann dabei über den Startup-Heater unterstützt werden.

In einer alternativen Weiterbildung ist die Startup-Heater-Zuführleitung in Strömungsrichtung der Sammelleitung, nach dem über den Kühlerleitungsanschluss der Sammelleitung zugeführten Kühlmediums angeordnet ist. Dadurch kann durch Vermischen von über den Kühlleitungsanschluss und von über den Bypassanschluss der Sammelleitung zugeführten Kühlmediums die Temperatur des durch den Wärmetauscher geleiteten Kühlmediums eingestellt werden.

In einer weiteren Ausgestaltung der Erfindung ist zwischen der Startup-Heater-Zuführleitung und der Startup-Heater-Abführleitung eine Drossel in der Sammelleitung angeordnet. Besonders bevorzugt ist dabei die Startup-Heater-Abführleitung in Strömungsrichtung der Sammelleitung nach der Startup-Heater-Zuführleitung angeordnet. Dies hat den Vorteil, dass ein Teil des Kühlmediums durch den Startup-Heater geleitet wird. Diese Drossel ist dabei besonders bevorzugt in Strömungsrichtung vor dem über den Kühlerleitungsanschluss der Sammelleitung zugeführten Kühlmedium angeordnet. Dadurch wird eine Strömung durch den Startup-Heater generiert, wenn das Kühlmedium über die Bypassleitung der Sammelleitung zugeleitet wird. Zu einer Durchströmung des Startup-Heaters kommt es somit erst, wenn der Kühler umgangen wird um eine schnellere Aufheizung zu erzielen. Die schnellere Aufheizung kann dabei über den Startup-Heater unterstützt werden.

In einer Alternativen Ausführung der Erfindung ist die Drossel in Strömungsrichtung der Sammelleitung nach dem über den Kühlerleitungsanschluss der Sammelleitung zugeführten Kühlmedium angeordnet. Dadurch kann auch ein Teil des über den Kühlerleitungsanschluss eingeleiteten Kühlmediums in die Startup-Heater-Zuführleitung eingeleitet werden, so dass eine verbesserte Möglichkeit der Temperaturregelung des in die Startup-Heater-Zuführleitung eingeleiteten Kühlmediums besteht.

In einer bevorzugten Weiterbildung weist die Startup-Heater-Abführleitung einen lonentauscheranschluss zum Anschließen eines lonentauschers und/oder einen Ausgleichsbehälteranschluss zum Anschließen eines Ausgleichsbehälters auf. Dies hat den Vorteil, dass das die entsprechenden Anschlüsse nicht in der Sammelleitung vorgesehen werden müssen.

Die Erfindung umfasst zusätzlich ein Kraftfahrzeug welches das erfindungsgemäße Kühlsystem für Brennstoffzellenstacks umfasst. Dadurch können die zu dem Kühlsystem genannten Vorteile erzielt werden.

Ausführungsbeispiele der Erfindung sind in der Zeichnung dargestellt und in der nachfolgenden Beschreibung näher erläutert. Es zeigt:
- Figur 1: Blockschaltbild eines Kühlsystems für Brennstoffzellenstacks nach einem ersten Ausführungsbeispiel der Erfindung,
- Figur 2: Blockschaltbild des Kühlsystems für Brennstoffzellenstacks nach einem zweiten Ausführungsbeispiel der Erfindung,
- Figur 3: Blockschaltbild des Kühlsystems für Brennstoffzellenstacks nach einem dritten Ausführungsbeispiel der Erfindung, und
- Figur 4: Blockschaltbild des Kühlsystems für Brennstoffzellenstacks nach einem vierten Ausführungsbeispiel der Erfindung.

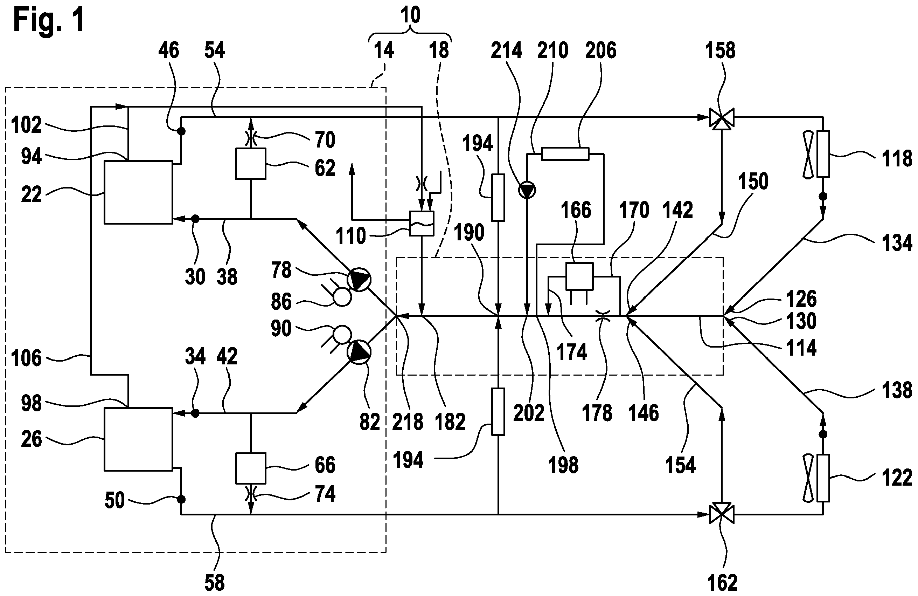

In Figur 1 ist ein Blockschaltbild eines Kühlsystems 10 für Brennstoffzellenstacks nach einem ersten Ausführungsbeispiel der Erfindung gezeigt. Das Kühlsystem 10 umfasst dabei ein in der Figur gestrichelt umrandetes erstes Kühlmodul 14 und ein gestrichelt umrandetes zweites Kühlmodul 18. Die nicht gestrichelt umrandeten Komponenten sind nicht Teil des Kühlsystems 10. Diese Komponenten sind aber zum besseren Verständnis der Erfindung gezeigt.

Das erste Kühlmodul 14 des ersten Ausführungsbeispiels umfasst dabei einen ersten und einen zweiten Brennstoffzellenstack 22, 26. Das erste Kühlmodul 14 umfasst zusätzlich einen dem erste Brennstoffzellenstack 22 zugeordneten ersten Zulaufleitungsanschluss 30 und einen dem zweiten Brennstoffzellenstack 26 zugeordneten zweiten Zulaufleitungsanschluss 34. An den Zulaufleitungsanschlüssen 30, 34 ist eine dem ersten Kühlmodul 14 zugeordnete erste Zulaufleitung 38 und eine dem zweiten Kühlmodul 18 zugeordnete zweite Zulaufleitung 42 zum Zuführen von Kühlmedium zu den Brennstoffzellenstacks 22, 26 angeschlossen.

Entsprechend den Zulaufleitungsanschlüssen 30, 34 umfasst das erste Kühlmodul 14 einen ersten und einen zweiten Ablaufleitungsanschluss 46, 50 zum Anschließen einer ersten und einer zweiten Ablaufleitung 54, 58 zum Abführen von Kühlmedium von den Brennstoffzellenstacks 22, 26. Zwischen der ersten Zulaufleitung 38 und der ersten Ablaufleitung 54 ist in dem ersten Kühlmodul 14 ein erster Zwischenkühler 62 angeordnet über den ein Teil des Kühlmediums von der ersten Zulaufleitung 38 in die erste Ablaufleitung 54 leitbar ist. Dadurch kann eine Zuluft zu dem ersten Brennstoffzellenstack 22 gekühlt werden. Entsprechend ist ein zweiter Zwischenkühler 66 zwischen der zweiten Zulaufleitung 42 und der zweiten Ablaufleitung 58 angeordnet. Um eine Durchströmung des ersten und zweiten Zwischenkühlers 62, 66 zu reduzieren ist eine erste Zwischenkühlerdrossel 70 und eine zweite Zwischenkühlerdrossel 74 angeordnet.

In der ersten und der zweiten Zulaufleitung 38, 42 ist jeweils eine erste und zweite Kühlmediumpumpe 78, 82 angeordnet, mittels welcher das Kühlmedium zum ersten beziehungsweise zum zweiten Brennstoffzellenstack 22, 26 pumpbar ist. Die erste Kühlmediumpumpe 78 wird dabei über einen ersten Kühlmediumpumpenmotor 86 und die zweite Kühlmediumpumpe 82 wird entsprechend über einen zweiten Kühlmediumpumpenmotor 90 angetrieben.

Das erste Kühlmodul 14 umfasst zusätzlich eine dem ersten Brennstoffzellenstack 22 zugeordneten ersten Entlüftungsleitungsanschluss 94 und einen dem zweiten Brennstoffzellenstack 26 zugeordneten zweiten Entlüftungsleitungsanschluss 98. An diesen Anschlüssen 94, 98 ist eine Entlüftungsleitung 102, 106 anschließbar, so dass die Brennstoffzellenstacks 22, 26 über einen mit der Entlüftungsleitung 102, 106 verbundenen Ausgleichsbehälter 110 entlüftbar sind.

Das zweite Kühlmodul 18 umfasst eine Sammelleitung 114, in welche das gesamte Kühlmedium der Brennstoffzellenstacks 22, 26 zusammengeführt wird. Über die Zulaufleitungen 38, 42 ist die Sammelleitung 114 mit den Zulaufleitungsanschlüssen 30, 34 des ersten Kühlmoduls 14 verbunden. Die Sammelleitung 114 weist entsprechend einem ersten und einem zweiten Kühler 118, 122 einen ersten und einen zweiten Kühlerleitungsanschluss 126, 130 zum Anschluss an eine erste und zweite Kühlerleitung 134, 138 der Kühler 118, 122 auf. Über die Kühlerleitungsanschlüsse 126, 130 ist der Sammelleitung 114 gekühltes Kühlmedium der Kühler 118, 122 zuführbar.

Die Sammelleitung 114 weist einen ersten und einen zweiten Bypassleitungsanschluss 142, 146 zum Anschluss an eine erste und an eine zweite Bypassleitung 150, 154 auf. Mittels der Bypassleitungen 150, 154, welche in dem ersten Ausführungsbeispiel in Strömungsrichtung der Sammelleitung 114 nach den Kühlerleitungsanschlüssen 126, 130 angeschlossen sind ist eine Kühlung des Kühlmediums umgehbar. Dazu werden 3/2-Wege-Umschaltventile 158, 162 entsprechend geschaltet, so dass ein Teil oder auch das gesamte Kühlmedium über die Bypassleitungen 150, 154 in die Sammelleitung 114 einleitbar ist.

Das zweite Kühlmodul 18 weist zusätzlich einen in diesem Ausführungsbeispiel als PTC-Heizer ausgebildeten Startup-Heater 166 auf, welcher über eine Startup-Heater-Zuführleitung 170 und eine Startup-Heater-Abführleitung 174 mit der Sammelleitung 114 verbunden ist. Die Startup-Heater Zuführleitung 170 und die Startup-Heater Abführleitung 174 sind in Strömungsrichtung der Sammelleitung 114 nach einem der Sammelleitung 114 über die Bypassleitungsanschlüssen 142, 146 zugeführten Kühlmedium angeordnet. Dadurch kann das über die Bypassleitungen 150, 154 an den Kühlern 118, 122 vorbeigeführte Kühlmedium durch den Startup-Heater 166 aufgeheizt werden.

In dem ersten Ausführungsbeispiel sind die Startup-Heater-Zuführleitung 170 und die Startup-Heater-Abführleitung 174 zusätzlich in Strömungsrichtung der Sammelleitung 114 nach den Kühlerleitungsanschlüssen 126, 130 und nach den Bypassleitungsanschlüssen 142, 146 angeordnet. Um eine ausreichende Durchströmung des Startup-Heaters 166 zu gewährleisten ist zwischen der Startup-Heater-Zuführleitung 170 und der Startup-Heater-Abführleitung 174 eine Drossel 178 in der Sammelleitung 114 angeordnet. Diese Drossel 178 ist entsprechend der Startup-Heater-Zuführleitung 170 und der Startup-Heater-Abführleitung 174 nach den Kühlerleitungsanschlüssen 126, 130 und den Bypassleitungsanschlüssen 142, 146 angeordnet.

Das zweite Kühlmodul 18 umfasst zusätzlich einen Ausgleichsbehälteranschluss 182, an dem der Ausgleichsbehälter 110 anschließbar ist und zwei lonentauscheranschlüsse 190 zum Anschließen von zwei lonentauschern 194. Zwischen den lonentauscheranschlüssen 190 und der Startup-Heater-Abführleitung 174 ist ein Wärmetauscherzuleitungsanschluss 198 und ein Wärmetauscherableitungsanschluss 202 zum Anschließen eines Wärmetauschers 206 an der Sammelleitung 114 angeschlossen. Zum Durchleiten von Kühlmedium durch den Wärmetauscher 206 ist in einer Wärmetauscherabführleitung 210 eine Wärmetauscherpumpe 214 angeordnet. In dem ersten Ausführungsbeispiel ist der Wärmetauscher 206 ein Kabinenheizungswärmetauscher, so dass warmes Kühlmedium durch den Kabinenheizungswärmetauscher 206 leitbar ist. Dadurch kann eine fahrzeugseitige Kabine beheizt werden.

An einem in Strömungsrichtung der Sammelleitung 114 liegenden Sammelleitungsende 218 ist diese mit der ersten und der zweiten Zulaufleitung 38, 42 verbunden, so dass das Kühlmedium dem ersten und dem zweiten Brennstoffzellenstack 22, 26 zuführbar ist.

In einem nicht gezeigten Ausführungsbeispiel können die Entlüftungsleitungsanschlüsse 94, 98 des ersten Kühlmoduls14 Drosseln aufweisen. Diese Drosseln können aber auch außerhalb des ersten Kühlmoduls 14, fahrzeugseitig in den beispielsweise Entlüftungsleitungen 102, 106 angeordnet sein.

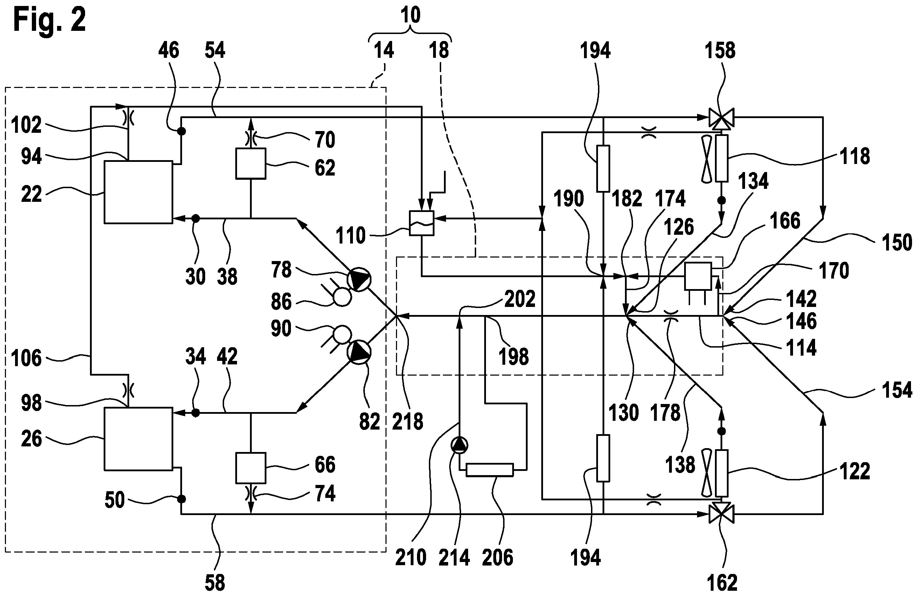

Figur 2 zeigt ein Blockschaltbild des Kühlsystems 10 für Brennstoffzellenstacks 22, 26 nach einem zweiten Ausführungsbeispiel der Erfindung. Das zweite Ausführungsbeispiel unterscheidet sich im Wesentlichen dadurch von dem ersten Ausführungsbeispiel, dass die Kühlerleitungsanschlüsse 126, 130 in Strömungsrichtung der Sammelleitung 114 nach den Bypassleitungsanschlüssen 142, 146 angeordnet sind. Zusätzlich ist die Startup-Heater-Zuführleitung 170 zwischen den Kühlerleitungsanschlüssen 126, 130 und den Bypassleitungsanschlüssen 142, 146 mit der Sammelleitung 114 verbunden. Dementsprechend ist die Drossel 178 in Strömungsrichtung vor dem über die Kühlerleitungsanschlüsse 126, 130 der Sammelleitung 114 zugeführten Kühlmedium angeordnet. Zusätzlich sind in der Sammelleitung 114 keine lonentauscheranschlüsse 190 und kein Ausgleichsbehälteranschluß 182 angeordnet. Stattdessen sind die lonentauscher 194 und der Ausgleichsbehälter 182 über die Startup-Heater-Abführleitung 174 indirekt an der Sammelleitung 114 angeschlossen.

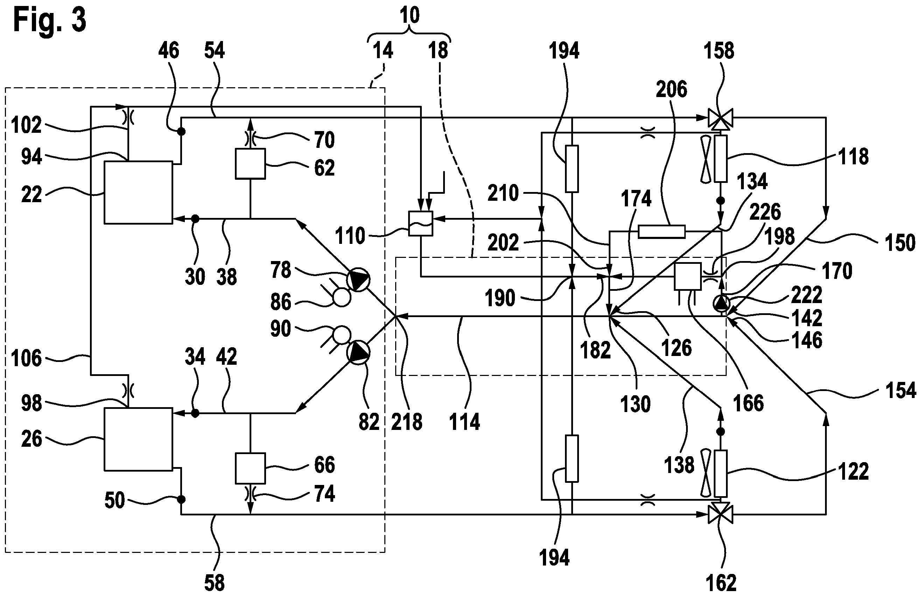

In Figur 3 ist ein Blockschaltbild des Kühlsystems 10 für Brennstoffzellenstacks 22, 26 nach einem dritten Ausführungsbeispiel der Erfindung gezeigt. Dieses Ausführungsbeispiel unterscheidet sich von dem in Figur 2 gezeigten zweiten Ausführungsbeispiel im Wesentlichen dadurch, dass der Kabinenheizungswärmetauscher 206 parallel zu dem Startup-Heater 166 angeordnet ist. Zusätzlich ist in der Startup-Heater-Zuführleitung 170 eine Startup-Heater-Pumpe 222 angeordnet, mit welcher dem Startup-Heater 166 Kühlmedium zuführbar ist. Dadurch kann die Drossel 178 in der Sammelleitung 114 entfallen.

Der Kabinenheizungswärmetauscher 206 ist in Strömungsrichtung vor dem Startup-Heater 166 mit der Startup-Heater-Zuführleitung 170 und nach dem Startup-Heater mit der Startup-Heater-Abführleitung 174 verbunden. Um eine definierte Aufteilung der Durchflussmenge zwischen Startup-Heater 166 und Kabinenheizungswärmetauscher 206 zu erreichen ist in der Startup-Heater-Zuführleitung 170 eine Startup-Heater-Drossel 226 angeordnet. Durch die parallele Anordnung des Kabinenheizungswärmetauschers 206 zum Startup-Heater 166 entfallen der Wärmetauscherzuleitungsanschluss 198 und der Wärmetauscherableitungsanschluss 202 in der Sammelleitung 114.

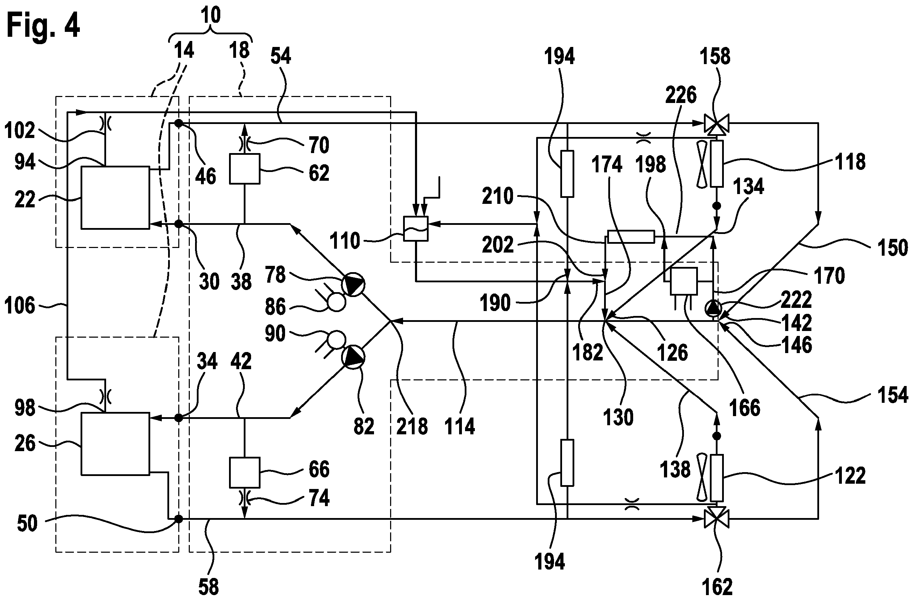

Figur 4 zeigt ein Blockschaltbild des Kühlsystems 10 für Brennstoffzellenstacks 22, 26 nach einem vierten Ausführungsbeispiel der Erfindung. Dieses Ausführungsbeispiel unterscheidet sich im Wesentlichen dadurch von dem in Figur 3 gezeigten dritten Ausführungsbeispiel, dass jeder Brennstoffzellenstack 22, 26 in einem separaten ersten Kühlmodul 14 angeordnet ist. Eine separate Anordnung jeder Brennstoffzellenstacks 22, 26 in einem einzigen ersten Kühlmodul 14 ist jedoch auch für alle zuvor genannten Ausführungsbeispiele möglich.

Zusätzlich umfasst das zweite Kühlmodul 18 die Zulaufleitungen 38, 42 und die Ablaufleitungen 54, 58, welche mit den Zulaufleitungsanschüssen 30, 34 beziehungsweise den Ablaufleitungsanschlüssen 46, 50 des ersten Kühlmoduls 14 verbunden sind. Dementsprechend umfasst das zweite Kühlmodul 18 auch die Zwischenkühler 62, 66, welche zwischen den Zulaufleitungen 38, 42 und den Ablaufleitungen 54, 58 angeordnet sind und die in den Zulaufleitungen 38, 42 angeordneten Kühlmediumpumpen 78, 82.

Im Gegensatz zu der Anordnung des Kabinenheizungswärmetauscher 206 in dem dritten Ausführungsbeispiel in Figur 3, ist der Kabinenheizungswärmetauscher 206 seriell mit dem Startup-Heater 166 verbunden. Der Kabinenheizungswärmetauscher 206 ist dementsprechend in der Startup-Heater-Abführleitung 174 angeordnet.

### Bezugszeichenliste

- 10: Kühlsystem
- 14: erstes Kühlmodul
- 18: zweites Kühlmodul
- 22: erster Brennstoffzellenstack
- 26: zweiter Brennstoffzellenstack
- 30: erster Zulaufleitungsanschluss
- 34: zweiter Zulaufleitungsanschluss
- 38: erste Zulaufleitung
- 42: zweite Zulaufleitung
- 46: erster Ablaufleitungsanschluss
- 50: zweiter Ablaufleitungsanschluss
- 54: erste Ablaufleitung
- 58: zweite Ablaufleitung
- 62: erster Zwischenkühler
- 66: zweiter Zwischenkühler
- 70: erste Zwischenkühlerdrossel
- 74: zweite Zwischenkühlerdrossel
- 78: erste Kühlmediumpumpe
- 82: zweite Kühlmediumpumpe
- 86: erster Kühlmediumpumpenmotor
- 90: zweiter Kühlmediumpumpenmotor
- 94: erster Entlüftungsleitungsanschluss
- 98: zweiter Entlüftungsleitungsanschluss
- 102: Entlüftungsleitung
- 106: Entlüftungsleitung
- 110: Ausgleichsbehälter
- 114: Sammelleitung
- 118: erster Kühler
- 122: zweiter Kühler
- 126: erster Kühlerleitungsanschluss
- 130: zweiter Kühlerleitungsanschluss
- 134: erste Kühlerleitung
- 138: zweite Kühlerleitung
- 142: erster Bypassleitungsanschluss
- 146: zweiter Bypassleitungsanschluss
- 150: erste Bypassleitung
- 154: zweite Bypassleitung
- 158: 3/2-Wege-Umschaltventil
- 162: 3/2-Wege-Umschaltventil
- 166: Startup-Heater
- 170: Startup-Heater-Zuführleitung
- 174: Startup-Heater-Abführleitung
- 178: Drossel
- 182: Ausgleichsbehälteranschluss
- 190: lonentauscheranschluss
- 194: lonentauscher
- 198: Wärmetauscherzuleitungsanschluss
- 202: Wärmetauscherableitungsanschluss
- 206: Wärmetauscher/Kabinenheizungswärmetauscher
- 210: Wärmetauscherabführleitung
- 214: Wärmetauscherpumpe
- 218: Sammelleitungsende
- 222: Startup-Heater-Pumpe
- 226: Startup-Heater-Drossel

## Patentansprüche

1. Kühlsystem (10) für Brennstoffzellenstacks (22, 26), wobei das Kühlsystem (10) umfasst:
- wenigstens ein erstes Kühlmodul (14), welches umfasst:
- einen wenigstens eine Brennstoffzelle aufweisenden Brennstoffzellenstack (22, 26),
- einen Zulaufleitungsanschluss (30, 34) zum Anschließen einer Zulaufleitung (38, 42) zum Zuführen von Kühlmedium zum Brennstoffzellenstack (22, 26),
- einen Ablaufleitungsanschluss (46, 50) zum Anschließen einer Ablaufleitung (54, 58) zum Abführen von Kühlmedium von dem Brennstoffzellenstack (22, 26),
- einen Entlüftungsleitungsanschluss (94, 98) zum Anschließen einer Entlüftungsleitung (102, 106),
- wenigstens ein zweites Kühlmodul (18), welches umfasst:
- wenigstens eine Sammelleitung (114), wobei die Sammelleitung (114) über die Zulaufleitung (38, 42) mit dem Zulaufleitungsanschluss (30, 34) des wenigstens einen ersten Kühlmoduls (14) verbunden ist,
- wenigstens einen Kühlerleitungsanschluss (126, 130) zum Anschluss an eine Kühlerleitung (134, 138) eines Kühlers (118, 122), über welches der Sammelleitung (114) gekühltes Kühlmedium des wenigstens einen Brennstoffzellenstacks (22, 26) zuführbar ist,
- wenigstens einen Bypassleitungsanschluss (142, 146) zum Anschluss an eine Bypassleitung (150, 154), mittels welcher eine Kühlung des Kühlmediums umgehbar ist,
- einen Startup-Heater (166), welcher über eine Startup-Heater-Zuführleitung (170) und eine Startup-Heater-Abführleitung (174) mit der Sammelleitung (114) verbunden sind, wobei die Startup-Heater-Zuführleitung (170) und die Startup-Heater-Abführleitung (174) in Strömungsrichtung der Sammelleitung (114) nach einem der Sammelleitung (114) über den Bypassleitungsanschluss (142, 146) zugeführten Kühlmedium angeordnet sind, und
- wenigstens einen Wärmetauscherzuleitungsanschluss (198) und wenigstens ein Wärmetauscherableitungsanschluss (202) zum Anschließen eines Wärmetauschers (206).

2. Kühlsystem (10) für Brennstoffzellenstacks (22, 26) nach Anspruch 1, **dadurch gekennzeichnet, dass** der Wärmetauscher (206) ein Kabinenheizungswärmetauscher ist.

3. Kühlsystem (10) für Brennstoffzellenstacks (22, 26) nach Anspruch 1 oder 2, **dadurch gekennzeichnet, dass** das zweite Kühlmodul (18) wenigstens eine Kühlmediumpumpe (78, 82) aufweist, mittels welcher das Kühlmedium zum ersten Kühlmodul (14) pumpbar ist.

4. Kühlsystem (10) für Brennstoffzellenstacks (22, 26) nach Anspruch 1 oder 2, **dadurch gekennzeichnet, dass** das erste Kühlmodul (14) die Zulaufleitung (38, 42) umfasst, welche mit dem Zulaufleitungsanschluss (30, 34) verbunden ist.

5. Kühlsystem (10) für Brennstoffzellenstacks (22, 26) nach Anspruch 4, **dadurch gekennzeichnet, dass** die Zulaufleitung (38, 42) eine Kühlmediumpumpe (78, 82) aufweist, mittels welcher das Kühlmedium zum Brennstoffzellenstack (22, 26) pumpbar ist.

6. Kühlsystem (10) für Brennstoffzellenstacks (22, 26) nach einem der Ansprüche 4 oder 5, **dadurch gekennzeichnet, dass** das erste Kühlmodul (14) die Ablaufleitung (54, 58) umfasst, welche mit dem Ablaufleitungsanschluss (46, 50) verbunden ist.

7. Kühlsystem (10) für Brennstoffzellenstacks (22, 26) nach Anspruch 6, **dadurch gekennzeichnet, dass** das erste Kühlmodul (14) wenigstens einen Zwischenkühler (62, 66) aufweist, welcher zwischen der Zulaufleitung (38, 42) und der Ablaufleitung (54, 58) angeordnet ist, so dass ein Teil des Kühlmediums von der Zulaufleitung (38, 42) in die Ablaufleitung (54, 58) leitbar ist.

8. Kühlsystem (10) für Brennstoffzellenstacks (22, 26) nach einem der vorherigen Ansprüche, **dadurch gekennzeichnet, dass** in der Startup-Heater-Zuführleitung (170) eine Startup-Heater-Pumpe (222) angeordnet ist, mit welcher dem Startup-Heater (166) Kühlmedium der Sammelleitung (114) zuführbar ist.

9. Kühlsystem (10) für Brennstoffzellenstacks (22, 26) nach Anspruch 8, **dadurch gekennzeichnet, dass** der Wärmetauscherzuleitungsanschluss (198) und der Wärmetauscherableitungsanschluss (202) für einen parallelen oder seriellen Betrieb des Wärmetauschers (206) zum Startup-Heater (166) angeordnet sind.

10. Kühlsystem (10) für Brennstoffzellenstacks (22, 26) nach einem der vorherigen Ansprüche, **dadurch gekennzeichnet, dass** das Kühlmedium des wenigstens einen Bypassleitungsanschlusses (142, 146) in Strömungsrichtung der Sammelleitung (114) nach dem Kühlerleitungsanschluss (126, 130) der Sammelleitung (114) zuführbar ist.

11. Kühlsystem (10) für Brennstoffzellenstacks (22, 26) nach einem der Ansprüche 1 bis 9, **dadurch gekennzeichnet, dass** das Kühlmedium des wenigstens einen Bypassleitungsanschlusses (142, 146) in Strömungsrichtung der Sammelleitung (114) vor dem Kühlerleitungsanschluss (126, 130) der Sammelleitung (114) zuführbar ist.

12. Kühlsystem (10) für Brennstoffzellenstacks (22, 26) nach Anspruch 11, **dadurch gekennzeichnet, dass** die Startup-Heater-Zuführleitung (170) in Strömungsrichtung der Sammelleitung (114), vor dem über den Kühlerleitungsanschluss (126, 130) der Sammelleitung (114) zugeführten Kühlmediums angeordnet ist.

13. Kühlsystem (10) für Brennstoffzellenstacks (22, 26) nach Anspruch 10 oder 11, **dadurch gekennzeichnet, dass** die Startup-Heater-Zuführleitung (170) in Strömungsrichtung der Sammelleitung (114), nach dem über den Kühlerleitungsanschluss (126, 130) der Sammelleitung (114) zugeführten Kühlmediums angeordnet ist.

14. Kühlsystem (10) für Brennstoffzellenstacks (22, 26) nach einem der vorherigen Ansprüche, **dadurch gekennzeichnet, dass** zwischen der Startup-Heater-Zuführleitung (170) und der Startup-Heater-Abführleitung (174) eine Drossel (178) in der Sammelleitung (114) angeordnet ist.

15. Kühlsystem (10) für Brennstoffzellenstacks (22, 26) nach den Ansprüchen 14 und 12 oder 13, **dadurch gekennzeichnet, dass** die Drossel (178) in Strömungsrichtung vor dem über den Kühlerleitungsanschluss (126, 130) der Sammelleitung (114) zugeführten Kühlmedium angeordnet ist.

16. Kühlsystem (10) für Brennstoffzellenstacks (22, 26) nach Anspruch 14 und 12 oder 13, **dadurch gekennzeichnet, dass** die Drossel (178) in Strömungsrichtung nach dem über den Kühlerleitungsanschluss (126, 130) der Sammelleitung (114) zugeführten Kühlmedium angeordnet ist.

17. Kühlsystem (10) für Brennstoffzellenstacks (22, 26) nach einem der vorherigen Ansprüche, **dadurch gekennzeichnet, dass** die Startup-Heater-Abführleitung (174) einen lonentauscheranschluss (190) zum Anschließen eines lonentauschers (194) und/oder einen Ausgleichsbehälteranschluss (182) zum Anschließen eines Ausgleichsbehälters (110) aufweist.

18. Kraftfahrzeug umfassend ein Kühlsystem (10) nach einem der vorherigen Ansprüche.

## Claims

1. Cooling system (10) for fuel cell stacks (22, 26), the cooling system (10) comprising:
- at least a first cooling module (14), which comprises:
- a fuel cell stack (22, 26) having at least one fuel cell,
- a supply line connection (30, 34) for connecting a supply line (38, 42) for supplying cooling medium to the fuel cell stack (22, 26),
- a drain line port (46, 50) for connecting a drain line (54, 58) for discharging cooling medium from the fuel cell stack (22, 26),
- a vent line connector (94, 98) for connecting a vent line (102, 106),
- at least a second cooling module (18) comprising:
- at least one collector line (114), the collector line (114) being connected to the supply line connection (30, 34) of the at least one first cooling module (14) via the supply line (38, 42)
- at least one cooler line connection (126, 130) for connection to a cooler line (134, 138) of a cooler (118, 122), via which cooled cooling medium of the at least one fuel cell stack (22, 26) can be supplied to the collector line (114)
- at least one bypass line connection (142, 146) for connection to a bypass line (150, 154), by means of which cooling of the cooling medium can be bypassed
- a startup heater (166) which is connected to the collector line (114) via a startup heater supply line (170) and a startup heater discharge line (174), the startup heater supply line (170) and the startup heater discharge line (174) being arranged in the flow direction of the collector line (114) downstream of a cooling medium supplied to the collector line (114) via the bypass line connection (142, 146), and
- at least one heat exchanger supply line port (198) and at least one heat exchanger discharge line port (202) for connecting a heat exchanger (206).

2. Cooling system (10) for fuel cell stacks (22, 26) according to claim 1, **characterized in that** the heat exchanger (206) is a cabin heating heat exchanger.

3. Cooling system (10) for fuel cell stacks (22, 26) according to claim 1 or 2, **characterized in that** the second cooling module (18) has at least one cooling medium pump (78, 82) by means of which the cooling medium can be pumped to the first cooling module (14).

4. Cooling system (10) for fuel cell stacks (22, 26) according to claim 1 or 2, **characterized in that** the first cooling module (14) comprises the supply line (38, 42) connected to the supply line connector (30, 34).

5. Cooling system (10) for fuel cell stacks (22, 26) according to claim 4, **characterized in that** the feed line (38, 42) has a cooling medium pump (78, 82) by means of which the cooling medium can be pumped to the fuel cell stack (22, 26).

6. Cooling system (10) for fuel cell stacks (22, 26) according to any one of claims 4 or 5, **characterized in that** the first cooling module (14) comprises the drain line (54, 58) connected to the drain line connector (46, 50).

7. Cooling system (10) for fuel cell stacks (22, 26) according to claim 6, **characterized in that** the first cooling module (14) has at least one intercooler (62, 66) which is arranged between the supply line (38, 42) and the drain line (54, 58), so that part of the cooling medium can be conducted from the supply line (38, 42) into the drain line (54, 58).

8. Cooling system (10) for fuel cell stacks (22, 26) according to one of the previous claims, **characterized in that** a startup heater pump (222) is arranged in the startup heater supply line (170), with which startup heater (166) cooling medium can be supplied to the collector line (114).

9. Cooling system (10) for fuel cell stacks (22, 26) according to claim 8, **characterized in that** the heat exchanger supply port (198) and the heat exchanger discharge line port (202) are arranged for parallel or serial operation of the heat exchanger (206) to the startup heater (166).

10. Cooling system (10) for fuel cell stacks (22, 26) according to one of the preceding claims, **characterized in that** the cooling medium of the at least one bypass line connection (142, 146) can be supplied in the flow direction of the collector line (114) downstream of the cooler line connection (126, 130) of the collector line (114).

11. Cooling system (10) for fuel cell stacks (22, 26) according to one of claims 1 to 9, **characterized in that** the cooling medium of the at least one bypass line connection (142, 146) can be supplied to the collector pipe (114) in the flow direction of the collector line (114) upstream of the cooler line connection (126, 130).

12. Cooling system (10) for fuel cell stacks (22, 26) according to claim 11, **characterized in that** the startup heater supply line (170) is arranged in the flow direction of the collector line (114), upstream of the cooling medium supplied to the collector line (114) via the cooler line connection (126, 130).

13. Cooling system (10) for fuel cell stacks (22, 26) according to claim 10 or 11, **characterized in that** the startup heater supply line (170) is arranged in the flow direction of the collector line (114), downstream of the cooling medium supplied to the collector line (114) via the cooler line connection (126, 130).

14. Cooling system (10) for fuel cell stacks (22, 26) according to one of the previous claims, **characterized in that** a throttle (178) is arranged in the collector line (114) between the startup heater supply line (170) and the startup heater discharge line (174).

15. Cooling system (10) for fuel cell stacks (22, 26) according to claims 14 and 12 or 13, **characterized in that** the throttle (178) is arranged upstream of the cooling medium supplied to the collector line (114) via the cooler line connection (126, 130).

16. Cooling system (10) for fuel cell stacks (22, 26) according to claim 14 and 12 or 13, **characterized in that** the throttle (178) is arranged in the flow direction downstream of the cooling medium supplied to the collector line (114) via the cooler line connection (126, 130).

17. Cooling system (10) for fuel cell stacks (22, 26) according to any of the preceding claims, **characterized in that** the startup heater discharge line (174) comprises an ion exchanger connection (190) for connecting an ion exchanger (194) and/or an expansion tank connection (182) for connecting an expansion tank (110).

18. Motor vehicle comprising a cooling system (10) according to any one of the preceding claims.

## Revendications

1. Système de refroidissement (10) pour empilements de piles à combustible (22, 26), dans lequel le système de refroidissement (10) comprend :
- au moins un premier module de refroidissement (14) comprenant :
- un empilement de piles à combustible (22, 26) comportant au moins une pile à combustible,
- un raccord de conduite d'alimentation (30, 34) pour raccorder une conduite d'alimentation (38, 42) afin de fournir du fluide de refroidissement à l'empilement de piles à combustible (22, 26),
- un raccord de conduite d'évacuation (46, 50) pour raccorder une conduite d'évacuation (54, 58) afin d'évacuer le fluide de refroidissement de l'empilement de piles à combustible (22, 26),
- un raccord de conduite de purge (94, 98) pour raccorder une conduite de purge (102, 106),
- au moins un second module de refroidissement (18) comprenant :
- au moins une conduite de collecte (114), dans lequel la conduite de collecte (114) est reliée, par l'intermédiaire de la conduite d'alimentation (38, 42), au raccord de conduite d'alimentation (30, 34) du au moins un premier module de refroidissement (14),
- au moins un raccord de conduite de refroidisseur (126, 130) pour raccorder à une conduite de refroidisseur (134, 138) un refroidisseur (118, 122), par l'intermédiaire duquel du fluide de refroidissement refroidi du au moins un empilement de piles à combustible (22, 26) peut être fourni à la conduite de collecte (114),
- au moins un raccord de conduite de dérivation (142, 146) pour raccorder une conduite de dérivation (150, 154), au moyen de laquelle un refroidissement du fluide de refroidissement peut être évité,
- un élément chauffant de démarrage (166) qui est relié à la conduite de collecte (114) par l'intermédiaire d'une conduite d'alimentation d'élément chauffant de démarrage (170) et d'une conduite d'évacuation d'élément chauffant de démarrage (174), dans lequel la conduite d'alimentation d'élément chauffant de démarrage (170) et la conduite d'évacuation d'élément chauffant de démarrage (174) sont agencées en aval, dans une direction d'écoulement de la conduite de collecte (114), d'un fluide de refroidissement fourni à la conduite de collecte (114) par l'intermédiaire du raccord de conduite de dérivation (142, 146), et
- au moins un raccord de conduite d'entrée d'échangeur de chaleur (198) et au moins un raccord de conduite de sortie d'échangeur de chaleur (202) pour raccorder un échangeur de chaleur (206).

2. Système de refroidissement (10) pour empilements de piles à combustible (22, 26) selon la revendication 1, **caractérisé en ce que** l'échangeur de chaleur (206) est un échangeur de chaleur de chauffage de cabine.

3. Système de refroidissement (10) pour empilements de piles à combustible (22, 26) selon la revendication 1 ou 2, **caractérisé en ce que** le second module de refroidissement (18) comporte au moins une pompe à fluide de refroidissement (78, 82), au moyen de laquelle le fluide de refroidissement peut être pompé vers le premier module de refroidissement (14).

4. Système de refroidissement (10) pour empilements de piles à combustible (22, 26) selon la revendication 1 ou 2, **caractérisé en ce que** le premier module de refroidissement (14) comprend la conduite d'alimentation (38, 42) qui est reliée au raccord de conduite d'alimentation (30, 34).

5. Système de refroidissement (10) pour empilements de piles à combustible (22, 26) selon la revendication 4, **caractérisé en ce que** la conduite d'alimentation (38, 42) comporte une pompe à fluide de refroidissement (78, 82) au moyen de laquelle le fluide de refroidissement peut être pompé vers l'empilement de piles à combustible (22, 26).

6. Système de refroidissement (10) pour empilements de piles à combustible (22, 26) selon la revendication 4 ou 5, **caractérisé en ce que** le premier module de refroidissement (14) comprend la conduite d'évacuation (54, 58) qui est reliée au raccord de conduite d'évacuation (46, 50).

7. Système de refroidissement (10) pour empilements de piles à combustible (22, 26) selon la revendication 6, **caractérisé en ce que** le premier module de refroidissement (14) comporte au moins un refroidisseur intermédiaire (62, 66) qui est agencé entre la conduite d'admission (38, 42) et la conduite d'évacuation (54, 58), de sorte qu'une partie du fluide de refroidissement peut être acheminée dans la conduite d'évacuation (54, 58) à partir de la conduite d'alimentation (38, 42).

8. Système de refroidissement (10) pour empilements de piles à combustible (22, 26) selon l'une des revendications précédentes, **caractérisé en ce que** dans la conduite d'alimentation de l'élément chauffant de démarrage (170) est agencée une pompe d'élément chauffant de démarrage (222), au moyen de laquelle du fluide de refroidissement de la conduite de collecte (114) peut être fourni à l'élément chauffant de démarrage (166).

9. Système de refroidissement (10) pour empilements de piles à combustible (22, 26) selon la revendication 8, **caractérisé en ce que** le raccord de conduite d'entrée d'échangeur de chaleur (198) et le raccord de conduite de sortie d'échangeur de chaleur (202) sont agencés pour un fonctionnement en parallèle ou en série de l'échangeur de chaleur (206) par rapport à l'élément chauffant de démarrage (166).

10. Système de refroidissement (10) pour empilements de piles à combustible (22, 26) selon l'une des revendications précédentes, **caractérisé en ce que** le fluide de refroidissement du au moins un raccord de conduite de dérivation (142, 146) peut être fourni à la conduite de collecte (114) en aval, dans la direction d'écoulement de la conduite de collecte (114), du raccord de conduite de refroidisseur (126, 130).

11. Système de refroidissement (10) pour empilements de piles à combustible (22, 26) selon l'une des revendications 1 à 9, **caractérisé en ce que** le fluide de refroidissement du au moins un raccord de conduite de dérivation (142, 146) peut être fourni à la conduite de collecte (114) en amont, dans la direction d'écoulement de la conduite de collecte (114), du raccord de conduite de refroidisseur (126, 130).

12. Système de refroidissement (10) pour empilements de piles à combustible (22, 26) selon la revendication 11, **caractérisé en ce que** la conduite d'alimentation d'élément chauffant de démarrage (170) est agencée en amont, dans la direction d'écoulement de la conduite de collecte (114), du fluide de refroidissement fourni à la conduite de collecte (114) par l'intermédiaire du raccord de conduite de refroidisseur (126, 130).

13. Système de refroidissement (10) pour empilements de piles à combustible (22, 26) selon la revendication 10 ou 11, **caractérisé en ce que** la conduite d'alimentation d'élément chauffant de démarrage (170) est agencée en aval, dans la direction d'écoulement de la conduite de collecte (114), du fluide de refroidissement fourni à la conduite de collecte (114) par l'intermédiaire du raccord de conduite de refroidisseur (126, 130).

14. Système de refroidissement (10) pour empilements de piles à combustible (22, 26) selon l'une des revendications précédentes, **caractérisé en ce qu'**un étranglement (178) est agencé dans la conduite de collecte (114), entre la conduite d'alimentation d'élément chauffant de démarrage (170) et la conduite d'évacuation d'élément chauffant de démarrage (174).

15. Système de refroidissement (10) pour empilements de piles à combustible (22, 26) selon les revendications 14 et 12 ou 13, **caractérisé en ce que** l'étranglement (178) est agencé en amont, dans la direction d'écoulement, du fluide de refroidissement fourni à la conduite de collecte (114) par l'intermédiaire du raccord de conduite de refroidisseur (126, 130).

16. Système de refroidissement (10) pour empilements de piles à combustible (22, 26) selon la revendication 14 et 12 ou 13, **caractérisé en ce que** l'étranglement (178) est agencé en aval, dans la direction d'écoulement, du fluide de refroidissement fourni à la conduite de collecte (114) par l'intermédiaire du raccord de conduite de refroidisseur (126, 130).

17. Système de refroidissement (10) pour empilements de piles à combustible (22, 26) selon l'une des revendications précédentes, **caractérisé en ce que** la conduite d'évacuation d'élément chauffant de démarrage (174) comporte un raccord d'échangeur d'ions (190) pour raccorder un échangeur d'ions (194) et/ou un raccord de réservoir d'expansion (182) pour raccorder un réservoir d'expansion (110).

18. Véhicule automobile comprenant un système de refroidissement (10) selon l'une des revendications précédentes.
